# FASCICULE DE BREVET EUROPEEN

(11) **EP 3 883 853 B1**
(45) Date de publication et mention de la délivrance du brevet: **14.06.2023**
(21) Numéro de dépôt: 19800975.5
(22) Date de dépôt: 05.11.2019
(51) Int. Cl.: B64D 11/06

(54) **ENSEMBLE DE SIÈGES, NOTAMMENT POUR UN AVION**
SITZANORDNUNG, INSBESONDERE FÜR EIN FLUGZEUG
SEAT ASSEMBLY, ESPECIALLY FOR AN AIRPLANE

(30) Priorité: 23.11.2018 FR 1871732
(43) Date de publication de la demande: 29.09.2021
(73) Titulaire: Safran Seats, 78370 Plaisir (FR)
(72) Inventeur: GLAIN, Arthur, 92100 Boulogne Billancourt (FR); RUIZ, Oscar, 78000 Versailles (FR); EHRMANN, Charles, 78610 Les Bréviaires (FR)
(74) Mandataire: Marconnet, Sébastien
(86) Numéro de dépôt international: PCT/EP2019/080290
(87) Numéro de publication internationale: WO 2020/104189

(56) Documents cités:
- WO-A1-2018/078374
- WO-A1-2018/078376
- WO-A1-2018/178246

## Description

La présente invention porte sur un ensemble de sièges, notamment pour un avion. L'invention trouve une application particulièrement avantageuse pour les sièges d'avion de type "classe affaires". L'invention pourra également être mise en oeuvre avec des sièges installés dans d'autres moyens de transport, comme par exemple des sièges de bus, de trains, ou de bateaux.

Les sièges d'avion de type "classe affaires" offrent aux passagers différentes positions de confort, de la position "assise" jusqu'à une position "allongée" dans laquelle le siège définit un plan de couchage sensiblement horizontal pour le passager.

Le document WO2015/155687 décrit un ensemble de sièges individuels destinés à être installés dans une cabine d'avion comportant un premier siège et un deuxième siège disposés en regard l'un de l'autre. Chaque siège présente une largeur qui est plus grande qu'une largeur d'un siège conventionnel, de sorte que cela permet au passager de s'asseoir suivant différentes orientations. Par exemple, un passager peut être assis de façon à avoir son corps orienté suivant une direction qui est sensiblement parallèle à l'axe du siège, ou le passager peut être assis de façon à avoir son corps orienté suivant un angle non nul pouvant atteindre jusqu'à 90 degrés par rapport à l'axe du siège.

Une console centrale est disposée entre le premier siège et le deuxième siège. La console centrale comporte une première zone de pieds et une deuxième zone de pieds ouvertes suivant deux directions opposées l'une par rapport à l'autre. La première zone de pieds est associée au premier siège en regard duquel se situe l'ouverture de la première zone de pieds. La deuxième zone de pieds est associée au deuxième siège en regard duquel se situe l'ouverture de la deuxième zone de pieds.

Le document WO2018078374 décrit un agencement de sièges passagers dans une cabine d'avion, l'agencement de sièges passagers comprenant une première colonne d'unités de siège et une seconde colonne d'unités de siège, les première et seconde colonnes étant séparées par un couloir. Chaque colonne comprend une multiplicité de paires d'unités de siège, les paires d'unités de siège étant disposées consécutivement le long d'une direction longitudinale. Suivant cette configuration, un siège et une surface de lit correspondante présentent une même orientation.

Le document WO2018078376 décrit un agencement de sièges passagers comprenant une colonne d'unités de siège, la colonne comprenant une multiplicité de paires d'unités de siège, chaque paire d'unités de siège comprenant une unité de siège tournée vers l'intérieur et une unité de siège adjacente tournée vers l'extérieur. Suivant cette configuration, un siège et une surface de lit correspondante présentent une même orientation.

Le document WO2018178246 décrit un agencement de sièges individuels destiné à être installé dans une cabine d'avion. L'agencement de sièges comprend au moins un ensemble de deux sièges tournés vers l'intérieur dans la direction de l'axe longitudinal de l'agencement. Suivant cette configuration, un siège et une surface de lit correspondante présentent une même orientation.

L'invention vise à améliorer la densité de remplissage de la cabine d'avion d'une telle configuration de siège en proposant un ensemble de sièges individuels destinés à être installés dans une cabine d'avion ayant un axe longitudinal, selon la revendication 1.

Selon une réalisation, le premier angle et le deuxième angle sont opposés l'un par rapport à l'autre lorsque ces angles sont mesurés par rapport à la droite de référence.

Selon une réalisation, le premier angle et le deuxième angle sont égaux en valeur absolue.

Selon une réalisation, une valeur absolue du premier angle ou du deuxième angle est comprise entre 15 et 35 degrés et vaut de préférence de l'ordre de 25 degrés.

Selon une réalisation, le troisième angle et le quatrième angle sont opposés l'un par rapport à l'autre lorsque ces angles sont mesurés par rapport à la droite de référence.

Selon une réalisation, le troisième angle et le quatrième angle sont égaux en valeur absolue.

Selon une réalisation, une valeur absolue du troisième angle ou du quatrième angle est compris entre 15 et 35 degrés et vaut de préférence de l'ordre de 25 degrés.

Selon une réalisation, chaque siège présente des côtés latéraux sensiblement alignés avec des côtés latéraux de l'autre siège, de sorte qu'en vue de dessus, l'ensemble de sièges présente une forme de parallélogramme.

Selon une réalisation, un siège et une zone de pieds correspondante sont séparés entre eux par un espace.

Selon une réalisation, l'espace est destiné à être comblé au moins en partie par un coussin rapporté définissant une partie d'une surface de lit.

Selon une réalisation, le coussin rapporté est destiné à être stocké sous une assise d'un siège correspondant.

Selon une réalisation, le siège étant convertible entre une position assise et une position allongée, l'espace est destiné à être comblé au moins en partie par une assise du siège lorsque ce dernier est en position allongée.

Selon une réalisation, la première zone de pieds et la deuxième zone de pieds sont superposées au moins partiellement suivant l'axe de la cabine d'avion.

Selon une réalisation, la console centrale comporte une paroi de séparation.

L'invention a également pour objet une cabine d'avion caractérisée en ce qu'elle comporte au moins une rangée d'ensembles de sièges tel que précédemment défini.

Selon une réalisation, la rangée est formée par une alternance successive d'un bloc de deux sièges et d'une console centrale, chaque bloc comportant deux sièges tournés dans deux directions opposées et disposés dos à dos.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] est une vue de dessus d'une cabine d'avion comportant des ensembles de sièges individuels selon la présente invention;
[Fig. 2] est une vue de dessus d'une cabine d'avion comportant des ensembles de sièges selon l'invention faisant apparaître les empreintes des surfaces de lits des sièges;
[Fig. 3] est une vue en perspective d'un siège appartenant à un ensemble selon la présente invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

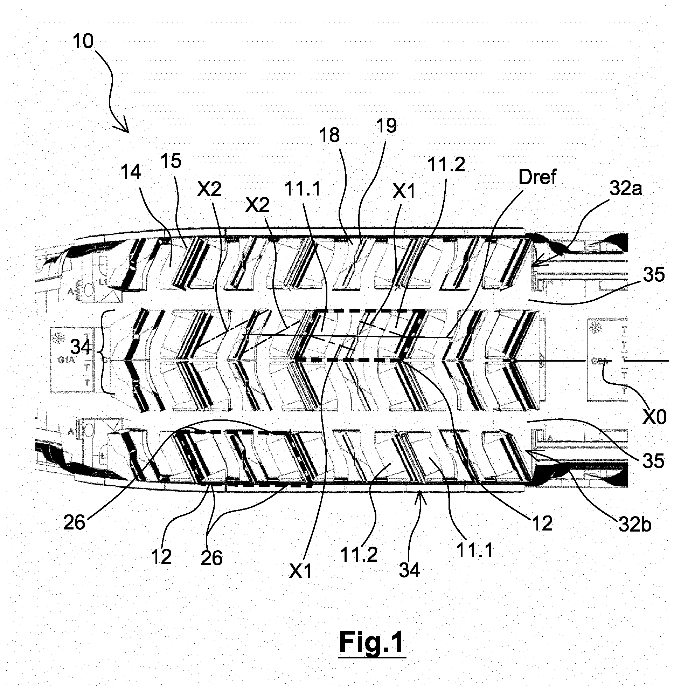

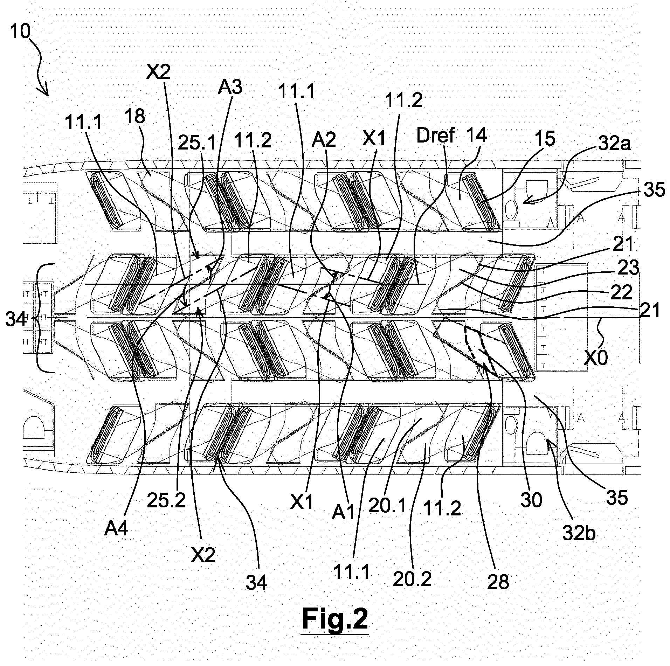

Les figures 1 et 2 montrent une cabine d'avion 10 d'axe longitudinal X0 dans laquelle sont installés plusieurs ensembles 12 de sièges individuels 11.1, 11.2. Cet ensemble 12 comporte un premier siège 11.1 et un deuxième siège 11.2 disposés en regard l'un de l'autre. Chaque siège 11.1, 11.2 présente un axe X1 qui est un axe horizontal passant par un plan médian de l'assise et du dossier du siège.

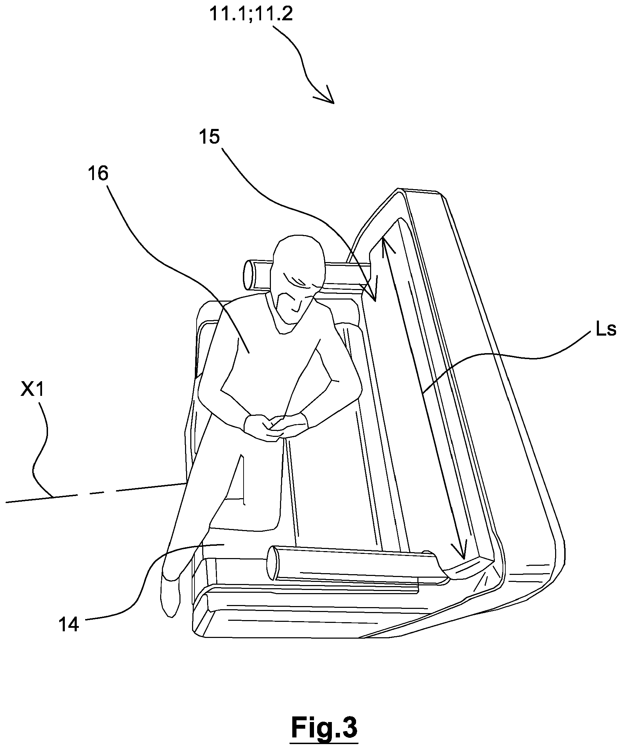

Comme on peut le voir sur la figure 3, chaque siège 11 comporte une assise 14 et un dossier 15 qui pourra, le cas échéant, être réalisé en deux parties. Chaque siège 11.1, 11.2 présente une largeur Ls qui est plus grande qu'une largeur d'un siège conventionnel, de sorte que cela permet à un passager 16 de s'asseoir suivant différentes orientations. Par exemple, le passager 16 peut être assis de façon à avoir son corps orienté suivant une direction qui est sensiblement parallèle à l'axe X1 du siège 11.1, 11.2, ou de façon à avoir son corps orienté suivant un angle non nul pouvant atteindre jusqu'à 90 degrés par rapport à l'axe X1 du siège 11.1, 11.2.

Une console centrale 18 est disposée entre le premier siège 11.1 et le deuxième siège 11.2. La console centrale 18 comporte avantageusement une paroi de séparation 19 entre les deux sièges 11.1, 11.2. La paroi de séparation 19 comporte avantageusement un emplacement pour le montage d'écrans, et/ou de dispositifs électroniques, et/ou de compartiments de rangement.

La console centrale 18 comporte une première zone de pieds 20.1 et une deuxième zone de pieds 20.2 ouvertes suivant deux directions opposées l'une par rapport à l'autre. La première zone de pieds 20.1 est associée au premier siège 11.1 en regard duquel se situe l'ouverture de la première zone de pieds 20.1. La deuxième zone de pieds 20.2 est associée au deuxième siège 11.2 en regard duquel se situe l'ouverture de la deuxième zone de pieds 20.2. De préférence, la première zone de pieds 20.1 et la deuxième zone de pieds 20.2 sont superposées au moins partiellement suivant l'axe X0 de la cabine d'avion 10.

Comme cela est visible sur la figure 2, les zones de pieds 20.1, 20.2 sont délimitées chacune par un fond 21, les fonds 21 étant reliés entre eux par une paroi commune 22. En outre, les zones de pieds 20.1, 20.2 présentent chacune une paroi supérieure 23 plane sur laquelle le passager 16 du siège 11 opposé pourra notamment poser des objets. La paroi supérieure 23 pourra ainsi servir de table, de surface de travail, de table de repas, de table de cocktail ou de toute autre surface utilisable pour un passager 16 assis dans le siège 11 opposé (c'est-à-dire le siège 11 qui n'a pas accès à l'ouverture de la zone de pieds). Autrement dit, une partie d'une zone de pieds 20.1, 20.2 s'étend dans l'espace occupé par un passager 16 assis dans le siège 11 opposé.

Le premier siège 11.1 est tourné vers l'intérieur en direction de l'axe X0 de la cabine d'avion 10 et le deuxième siège 11.2 est tourné vers l'extérieur à l'opposé de l'axe X0 de la cabine d'avion 10, de sorte qu'un axe X1 du premier siège 11.1 forme un premier angle A1 non nul par rapport à une droite de référence Dref et qu'un axe X1 du deuxième siège 11.2 forme un deuxième angle A2 non nul par rapport à la droite de référence Dref. La droite de référence Dref est une droite parallèle à l'axe X0 de la cabine d'avion 10 passant par un plan médian de l'ensemble 12 de deux sièges 11.1, 11.2.

Au moins une partie du premier siège 11.1 et de la première zone de pieds 20.1 correspondante sont aptes à définir au moins une partie d'une première surface de lit 25.1 tournée vers l'extérieur à l'opposé de l'axe X0 de la cabine d'avion 10, de sorte qu'un axe X2 de la première surface de lit 25.1 forme un troisième angle A3 non nul par rapport à la droite de référence Dref.

Au moins une partie du deuxième siège 11.2 et de la deuxième zone de pieds 20.2 correspondante sont aptes à définir au moins une partie d'une deuxième surface de lit 25.2 tournée vers l'intérieur en direction de l'axe X0 de la cabine d'avion 10, de sorte qu'un axe X0 de la deuxième surface de lit 25.2 forme un quatrième angle A4 non nul par rapport à la droite de référence Dref.

Le premier angle A1 et le deuxième angle A2 sont opposés l'un par rapport à l'autre lorsque ces angles A1, A2 sont mesurés par rapport à la droite de référence Dref prise comme origine de mesure d'angle. Avantageusement, le premier angle A1 et le deuxième angle A2 sont égaux en valeur absolue. Une valeur absolue du premier angle A1 ou du deuxième angle A2 est par exemple comprise entre 15 et 35 degrés et vaut de préférence de l'ordre de 25 degrés.

Le troisième angle A3 et le quatrième angle A4 sont opposés l'un par rapport à l'autre lorsque ces angles A3, A4 sont mesurés par rapport à la droite de référence Dref prise comme origine de mesure d'angle. Avantageusement, le troisième angle A3 et le quatrième angle A4 sont égaux en valeur absolue. Une valeur absolue du troisième angle A3 ou du quatrième angle A4 est par exemple comprise entre 15 et 35 degrés et vaut de préférence de l'ordre de 25 degrés.

Chaque siège 11.1, 11.2 présente des côtés latéraux 26 sensiblement alignés avec des côtés latéraux 26 de l'autre siège 11.1, 11.2, de sorte qu'en vue de dessus, l'ensemble 12 de deux sièges 11.1, 11.2 présente une forme de parallélogramme à angle non droit.

Un siège 11.1, 11.2 et une zone de pieds 20.1, 20.2 correspondante sont séparés entre eux par un espace 28. Suivant un premier mode de réalisation, l'espace 28 est destiné à être comblé au moins en partie par un coussin rapporté 30 définissant une partie de la surface de lit 25.1, 25.2, tel que montré sur la figure 2. Le coussin rapporté 30 pourra être destiné à être stocké sous une assise 14 d'un siège 11 correspondant. Dans ce cas, les différentes parties du siège 11 (assise et dossier) pourront être fixes.

Suivant un deuxième mode de réalisation, le siège 11 est convertible, via une cinématique adaptée, entre une position "assise", correspondant à la position utilisée notamment lors des phases d'arrêt, de décollage, et d'atterrissage de l'avion, et une position "allongée", dans laquelle le siège 11 définit un plan de couchage sensiblement horizontal pour le passager 16. Dans ce cas, l'espace 28 est destiné à être comblé au moins en partie par l'assise 14 du siège 11 lorsque ce dernier est en position allongée. Selon des variantes de réalisation, le siège 11 pourra également prendre des positions intermédiaires, dites positions "relax", entre les deux positions extrêmes que constituent la position assise et la position allongée.

Dans l'exemple représenté sur les figures 1 et 2, la cabine d'avion 10 comporte plusieurs rangées d'ensembles de sièges 12. On distingue deux groupes latéraux 32a, 32b constitués respectivement chacun par une seule rangée d'ensembles de sièges 12 positionnée le long d'une paroi latérale du fuselage de la cabine d'avion 10. En outre, un groupe central 33 est préférentiellement constitué de deux rangées d'ensembles 12 de sièges. Dans un tel agencement, les rangées de sièges 11.1, 11.2 du groupe central 33 sont avantageusement accolées latéralement l'une par rapport à l'autre.

Les rangées pourront être formées par une alternance successive d'un bloc 34 de deux sièges 11 et d'une console centrale 18. Chaque bloc 34 comporte deux sièges 11.1, 11.2 tournés dans deux directions opposées. Les deux sièges 11.1, 11.2 d'un bloc 34 sont disposés dos à dos. Ainsi, un des sièges 11.1 du bloc 34 pourra être tourné vers l'intérieur de l'axe X0 de la cabine d'avion 10 et l'autre siège 11.2 du bloc 34 pourra être tourné vers l'extérieur à l'opposé de l'axe X0 de la cabine d'avion 10. Les assises 14 des sièges 11.1, 11.2 d'un bloc 34 sont ainsi dirigées suivant deux directions opposées l'une par rapport à l'autre.

Les groupes latéraux 32a, 32b sont respectivement séparés du groupe central 33 par un couloir de circulation 35. Selon la configuration présentée, deux couloirs de circulation 35 sont donc prévus dans la cabine d'avion 10, spécifiquement entre chaque groupe latéral 32a, 32b et le groupe central 33. Le passager de chaque siège 11.1, 11.2 a un accès direct au couloir de circulation 35 correspondant. En variante, les deux groupes latéraux 32a, 32b pourront être formés chacun par plus d'une rangée d'ensembles 12 de sièges. Le groupe central 33 pourra également comporter plus de deux ou d'une seule rangée d'ensembles de sièges 11.1, 11.2.

## Revendications

1. Ensemble (12) de sièges individuels destinés à être installés dans une cabine d'avion (10) ayant un axe longitudinal (X0), ledit ensemble comportant:
- un premier siège (11.1) et un deuxième siège (11.2) disposés en regard l'un de l'autre, chaque siège (11.1, 11.2) présentant un axe (X1),
- une console centrale (18) disposée entre le premier siège (11.1) et le deuxième siège (11.2), ladite console centrale (18) comportant une première zone de pieds (20.1) et une deuxième zone de pieds (20.2),
- la première zone de pieds (20.1) étant associée au premier siège (11.1) en regard duquel se situe une ouverture de la première zone de pieds (20.1),
- la deuxième zone de pieds (20.2) étant associée au deuxième siège (11.2) en regard duquel se situe une ouverture de la deuxième zone de pieds (20.2), le premier siège (11.1) étant tourné vers l'intérieur en direction de l'axe (X0) de la cabine d'avion (10) et le deuxième siège (11.2) étant tourné vers l'extérieur à l'opposé de l'axe (X0) de la cabine d'avion (10), de sorte qu'un axe (X1) du premier siège (11.1) forme un premier angle (A1) non nul par rapport à une droite de référence (Dref) parallèle à l'axe (X0) de la cabine d'avion (10), un axe (X1) du deuxième siège (11.2) formant un deuxième angle (A2) non nul par rapport à la droite de référence (Dref), **caractérisé en ce que** au moins une partie du premier siège (11.1) et de la première zone de pieds (20.1) correspondante sont aptes à définir au moins une partie d'une première surface de lit (25.1) tournée vers l'extérieur à l'opposé de l'axe (X0) de la cabine d'avion (10), de sorte qu'un axe (X2) de la première surface de lit (25.1) forme un troisième angle (A3) non nul par rapport à la droite de référence (Dref), et en ce q'au moins une partie du deuxième siège (11.2) et de la deuxième zone de pieds (20.2) correspondante sont aptes à définir au moins une partie d'une deuxième surface de lit (25.2) tournée vers l'intérieur en direction de l'axe (X0) de la cabine d'avion (10), de sorte qu'un axe (X2) de la deuxième surface de lit (25.2) forme un quatrième angle (A4) non nul par rapport à la droite de référence (Dref).

2. Ensemble de sièges selon la revendication 1, **caractérisé en ce que** le premier angle (A1) et le deuxième angle (A2) sont opposés l'un par rapport à l'autre lorsque ces angles (A1, A2) sont mesurés par rapport à la droite de référence (Dref).

3. Ensemble de sièges selon la revendication 1 ou 2, **caractérisé en ce que** le premier angle (A1) et le deuxième angle (A2) sont égaux en valeur absolue.

4. Ensemble de sièges selon l'une quelconque des revendications 1 à 3, **caractérisé en ce qu'**une valeur absolue du premier angle (A1) ou du deuxième angle (A2) est comprise entre 15 et 35 degrés et vaut de préférence de l'ordre de 25 degrés.

5. Ensemble de sièges selon l'une quelconque des revendications 1 à 4, **caractérisé en ce que** le troisième angle (A3) et le quatrième angle (A4) sont opposés l'un par rapport à l'autre lorsque ces angles (A3, A4) sont mesurés par rapport à la droite de référence (Dref).

6. Ensemble de sièges selon l'une quelconque des revendications 1 à 5, **caractérisé en ce que** le troisième angle (A3) et le quatrième angle (A4) sont égaux en valeur absolue.

7. Ensemble de sièges selon l'une quelconque des revendications 1 à 6, **caractérisé en ce qu'**une valeur absolue du troisième angle (A3) ou du quatrième angle (A4) est compris entre 15 et 35 degrés et vaut de préférence de l'ordre de 25 degrés.

8. Ensemble de sièges selon l'une quelconque des revendications 1 à 7, **caractérisé en ce que** chaque siège (11.1, 11.2) présente des côtés latéraux (26) sensiblement alignés avec des côtés latéraux (26) de l'autre siège (11.1, 11.2), de sorte qu'en vue de dessus, l'ensemble (12) de sièges (11.1, 11.2) présente une forme de parallélogramme.

9. Ensemble de sièges selon l'une quelconque des revendications 1 à 8, **caractérisé en ce qu'**un siège (11.1, 11.2) et une zone de pieds (20.1, 20.2) correspondante sont séparés entre eux par un espace (28).

10. Ensemble de sièges selon la revendication 9, **caractérisé en ce que** l'espace (28) est destiné à être comblé au moins en partie par un coussin rapporté (30) définissant une partie d'une surface de lit (25.1, 25.2).

11. Ensemble de sièges selon la revendication 10, **caractérisé en ce que** le coussin rapporté (30) est destiné à être stocké sous une assise (14) d'un siège (11.1, 11.2) correspondant.

12. Ensemble de sièges selon la revendication 9, **caractérisé en ce que** le siège (11.1, 11.2) étant convertible entre une position assise et une position allongée, l'espace (28) est destiné à être comblé au moins en partie par une assise (14) du siège (11) lorsque ce dernier est en position allongée.

13. Ensemble de sièges selon l'une quelconque des revendications 1 à 12, **caractérisé en ce que** la première zone de pieds (20.1) et la deuxième zone de pieds (20.2) sont superposées au moins partiellement suivant l'axe (X0) de la cabine d'avion (10).

14. Ensemble de sièges selon l'une quelconque des revendications 1 à 13, **caractérisé en ce que** la console centrale (18) comporte une paroi de séparation (19).

15. Cabine d'avion (10) **caractérisée en ce qu'**elle comporte au moins une rangée d'ensembles (12) de sièges tel que défini selon l'une quelconque des revendications précédentes.

16. Cabine d'avion selon la revendication 15, **caractérisée en ce que** la rangée est formée par une alternance successive d'un bloc (34) de deux sièges (11.1, 11.2) et d'une console centrale (18), chaque bloc (34) comportant deux sièges (11.1, 11.2) tournés dans deux directions opposées et disposés dos à dos.

## Patentansprüche

1. Anordnung (12) aus Einzelsitzen, die dazu bestimmt ist, in einer Flugzeugkabine (10) mit einer Längsachse (X0) installiert zu werden, wobei die Anordnung umfasst:
- einen ersten Sitz (11.1) und einen zweiten Sitz (11.2), die einander gegenüberliegend angeordnet sind, wobei jeder Sitz (11.1, 11.2) eine Achse (X1) aufweist,
- eine Mittelkonsole (18), die zwischen dem ersten Sitz (11.1) und dem zweiten Sitz (11.2) angeordnet ist, wobei die Mittelkonsole (18) einen ersten Fußbereich (20.1) und einen zweiten Fußbereich (20.2) umfasst, wobei
- der erste Fußbereich (20.1) dem ersten Sitz (11.1) zugeordnet ist, dem gegenüber eine Öffnung des ersten Fußbereichs (20.1) vorhanden ist,
- der zweite Fußbereich (20.2) dem zweiten Sitz (11.2) zugeordnet ist, dem gegenüber eine Öffnung des zweiten Fußbereichs (20.2) vorhanden ist,
der erste Sitz (11.1) nach innen in Richtung der Achse (X0) der Flugzeugkabine (10) weist und der zweite Sitz (11.2) nach außen in die entgegengesetzte Richtung der Achse (X0) der Flugzeugkabine (10) weist, so dass eine Achse (X1) des ersten Sitzes (11.1) einen ersten Nicht-Null-Winkel (A1) bezüglich einer Bezugsgeraden (Dref) parallel zur Achse (X0) der Flugzeugkabine (10) bildet, eine Achse (X1) des zweiten Sitzes (11.2) einen zweiten Nicht-Null-Winkel (A2) bezüglich einer Bezugsgeraden (Dref) bildet,
**dadurch gekennzeichnet, dass**
zumindest ein Teil des ersten Sitzes (11.1) und des entsprechenden ersten Fußbereichs (20.1) dazu angepasst sind, zumindest einen Teil einer ersten Liegefläche (25.1) zu definieren, die nach außen in die entgegengesetzte Richtung der Achse (X0) der Flugzeugkabine (10) weist, so dass eine Achse (X2) der ersten Liegefläche (25.1) einen von Null verschiedenen dritten Winkel (A3) bezüglich der Referenzgeraden (Dref) bildet, und dass
zumindest ein Teil der zweite Sitz (11.2) und des entsprechenden zweiten Fußbereichs (20.2) dazu angepasst sind, zumindest einen Teil einer zweiten Liegefläche (25.2) zu definieren, die nach innen in Richtung der Achse (X0) der Flugzeugkabine (10) weist, so dass eine Achse (X2) der zweiten Liegefläche (25.2) einen vierten Nicht-Null-Winkel (A4) bezüglich der Referenzgeraden (Dref) bildet.

2. Sitzanordnung nach Anspruch 1, **dadurch gekennzeichnet, dass** der erste Winkel (A1) und der zweite Winkel (A2) einander gegenüberliegen, wenn diese Winkel (A1, A2) bezüglich der Referenzgeraden (Dref) gemessen werden.

3. Sitzanordnung nach Anspruch 1 oder 2, **dadurch gekennzeichnet, dass** der erste Winkel (A1) und der zweite Winkel (A2) im Absolutwert gleich sind.

4. Sitzanordnung nach einem der Ansprüche 1 bis 3, **dadurch gekennzeichnet, dass** ein Absolutwert des ersten Winkels (A1) oder des zweiten Winkels (A2) zwischen 15 und 35 Grad liegt, und vorzugsweise in der Größenordnung von 25 Grad beträgt.

5. Sitzanordnung nach einem der Ansprüche 1 bis 4, **dadurch gekennzeichnet, dass** der dritte Winkel (A3) und der vierte Winkel (A4) einander gegenüberliegen, wenn diese Winkel (A3, A4) bezüglich der Referenzgeraden (Dref) gemessen werden.

6. Sitzanordnung nach einem der Ansprüche 1 bis 5, **dadurch gekennzeichnet, dass** der dritte Winkel (A3) und der vierte Winkel (A4) im Absolutwert gleich sind.

7. Sitzanordnung nach einem der Ansprüche 1 bis 6, **dadurch gekennzeichnet, dass** ein Absolutwert des dritten Winkels (A3) oder des vierten Winkels (A4) zwischen 15 und 35 Grad liegt, und vorzugsweise in der Größenordnung von 25 Grad beträgt.

8. Sitzanordnung nach einem der Ansprüche 1 bis 7, **dadurch gekennzeichnet, dass** jeder Sitz (11.1, 11.2) seitliche Seiten (26) aufweist, die im Wesentlichen mit seitlichen Seiten (26) des anderen Sitzes (11.1, 11.2) ausgerichtet sind, so dass die Anordnung (12) von Sitzen (11.1, 11.2) in Draufsicht die Form eines Parallelogramms hat.

9. Sitzanordnung nach einem der Ansprüche 1 bis 8, **dadurch gekennzeichnet, dass** ein Sitz (11.1, 11.2) und ein entsprechender Fußbereich (20.1, 20.2) durch einen Spalt (28) voneinander getrennt sind.

10. Sitzanordnung nach Anspruch 9, **dadurch gekennzeichnet, dass** der Spalt (28) dazu bestimmt ist, zumindest teilweise durch ein Zusatzkissen (30) ausgefüllt zu werden, das einen Teil einer Liegefläche (25.1, 25.2) definiert.

11. Sitzanordnung nach Anspruch 10, **dadurch gekennzeichnet, dass** das Zusatzkissen (30) dazu bestimmt ist, unter einer Sitzfläche (14) eines entsprechenden Sitzes (11.1, 11.2) eingelagert zu werden.

12. Sitzanordnung nach Anspruch 9, **dadurch gekennzeichnet, dass** wegen der Umstellfähigkeit des Sitzes (11.1, 11.2) zwischen einer Sitzposition und einer Liegeposition der Spalt (28) zumindest teilweise durch eine Sitzfläche (14) des Sitzes (11) ausgefüllt werden soll, wenn sich dieser in der Liegeposition befindet.

13. Sitzanordnung nach einem der Ansprüche 1 bis 12, **dadurch gekennzeichnet, dass** der erste Fußbereich (20.1) und der zweite Fußbereich (20.2) zumindest teilweise entlang der Achse (X0) der Flugzeugkabine übereinander liegen (10).

14. Sitzanordnung nach einem der Ansprüche 1 bis 13, **dadurch gekennzeichnet, dass** die Mittelkonsole (18) eine Trennwand (19) umfasst.

15. Flugzeugkabine (10), **dadurch gekennzeichnet, dass** sie mindestens eine Reihe von Sitzanordnungen (12) umfasst, wie sie nach einem der vorhergehenden Ansprüche definiert sind.

16. Flugzeugkabine nach Anspruch 15, **dadurch gekennzeichnet, dass** die Reihe durch eine aufeinanderfolgende Wechselanordnung eines Blocks (34) von zwei Sitzen (11.1, 11.2) und einer Mittelkonsole (18) gebildet ist, wobei jeder Block (34) zwei Sitze (11.1, 11.2) umfasst, die in zwei entgegengesetzte Richtungen weisen und Rücken an Rücken angeordnet sind.

## Claims

1. Assembly (12) of individual seats intended to be installed in an aircraft cabin (10) having a longitudinal axis (X0), said assembly comprising:
- a first seat (11.1) and a second seat (11.2) facing each other, each seat (11.1, 11.2) having an axis (X1),
- a central console (18) arranged between the first seat (11.1) and the second seat (11.2), said central console (18) comprising a first foot zone (20.1) and a second foot zone (20.2),
- the first foot zone (20.1) being associated with the first seat (11.1) in front of which there is an opening of the first foot zone (20.1),
- the second foot zone (20.2) being associated with the second seat (11.2) in front of which there is an opening of the second foot zone (20.2),
the first seat (11.1) facing inwards in the direction of the axis (X0) of the aircraft cabin (10) and the second seat (11.2) facing outwards in the opposite direction of the axis (X0) of the aircraft cabin (10), so that an axis (X1) of the first seat (11.1) forms a first non-zero angle (A1) with respect to a reference straight line (Dref) parallel to the axis (X0) of the aircraft cabin (10), an axis (X1) of the second seat (11.2) forming a second non-zero angle (A2) with respect to the reference straight line (Dref),
**characterized in that**
at least a part of the first seat (11.1) and the corresponding first foot zone (20.1) are adapted to define at least a part of a first bed surface (25.1) facing outwards in the opposite direction of the axis (X0) of the aircraft cabin (10), such that an axis (X2) of the first bed surface (25.1) forms a non-zero third angle (A3) with respect to the reference straight line (Dref), and **in that** at least a part of the second seat (11.2) and the corresponding second foot zone (20.2) are able to define at least a part of a second bed surface (25.2) facing inwards in the direction of the axis (X0) of the aircraft cabin (10), so that an axis (X2) of the second bed surface (25.2) forms a fourth non-zero angle (A4) with respect to to the reference line (Dref).

2. Seat assembly according to claim 1, **characterized in that** the first angle (A1) and the second angle (A2) are opposite each other when these angles (A1, A2) are measured with respect to the reference strait line (Dref).

3. Seat assembly according to claim 1 or 2, **characterized in that** the first angle (A1) and the second angle (A2) are equal in absolute value.

4. Seat assembly according to any one of the claims 1 to 3, **characterized in that** an absolute value of the first angle (A1) or the second angle (A2) is between 15 and 35 degrees and is preferably of the order of 25 degrees.

5. Seat assembly according to any one of the claims 1 to 4, **characterized in that** the third angle (A3) and the fourth angle (A4) are opposite each other when these angles (A3, A4) are measured relative to the reference straight line (Dref) .

6. Seats assembly according to any one of the claims 1 to 5, **characterized in that** the third angle (A3) and the fourth angle (A4) are equal in absolute value.

7. Seat assembly according to any one of the claims 1 to 6, **characterized in that** an absolute value of the third angle (A3) or the fourth angle (A4) is between 15 and 35 degrees and is preferably of the order of 25 degrees.

8. Seat assembly according to any one of the claims 1 to 7, **characterized in that** each seat (11.1, 11.2) has lateral sides (26) substantially aligned with lateral sides (26) of the other seat (11.1, 11.2), so that the assembly (12) of seats (11.1, 11.2) has the shape of a parallelogram in top view.

9. Seat assembly according to any one of the claims 1 to 8, **characterized in that** a seat (11.1, 11.2) and a corresponding foot zone (20.1, 20.2) are separated from each other by a gap (28).

10. Seat assembly according to claim 9, **characterized in that** the gap (28) is intended to be filled at least in part by an added cushion (30) defining part of a bed surface (25.1, 25.2).

11. Seat assembly according to Claim 10, **characterized in that** the added cushion (30) is intended to be stored under a seating surface (14) of a corresponding seat (11.1, 11.2).

12. Seat assembly according to Claim 9, **characterized in that**, as the seat (11.1, 11.2) is convertible between a seated position and a lying position, the gap (28) is intended to be filled at least in part by a seating surface (14) of the seat (11) when the latter is in the lying position.

13. Seat assembly according to any one of the claims 1 to 12, **characterized in that** the first foot zone (20.1) and the second foot zone (20.2) are superposed at least partly along the axis (X0) of the aircraft cabin (10).

14. Seat assembly according to any one of the claims 1 to 13, **characterized in that** the central console (18) comprises a partition wall (19).

15. Aircraft cabin (10), **characterized in that** it comprises at least one row of seat assemblies (12) as defined according to any one of the preceding claims.

16. Aircraft cabin according to Claim 15, **characterized in that** the row is formed by a successive alternation of a block (34) of two seats (11.1, 11.2) and a central console (18), each block (34) comprising two seats (11.1, 11.2) facing in two opposite directions and arranged back to back.
